Europäisches Patentamt

(19) European Patent Office

Office européen des brevets

(11) Veröffentlichungsnummer : **0 142 609**
**B1**

(12) **EUROPÄISCHE PATENTSCHRIFT**

(45) Veröffentlichungstag der Patentschrift :
04.05.88

(21) Anmeldenummer : **84108496.5**

(22) Anmeldetag : **18.07.84**

(51) Int. Cl.⁴ : **A 61 B 5/10, G 01 S 5/00,
G 01 B 7/00**

(54) **Vorrichtung zur Messung des Ortes, der Lage und/oder der Orts-bzw. Lageänderung eines starren Körpers im Raum.**

(30) Priorität : 01.08.83 DE 3327742

(43) Veröffentlichungstag der Anmeldung :
29.05.85 Patentblatt 85/22

(45) Bekanntmachung des Hinweises auf die Patenterteilung : 04.05.88 Patentblatt 88/18

(84) Benannte Vertragsstaaten :
DE FR GB IT

(56) Entgegenhaltungen :
DE-A- 2 715 106
DE-A- 2 814 551
DE-A- 2 852 764
US-A- 3 822 694

(73) Patentinhaber : Siemens Aktiengesellschaft Berlin
und München
Wittelsbacherplatz 2
D-8000 München 2 (DE)

(72) Erfinder : Nickel, Bernd
Goldregenstrasse 2
D-6143 Lorsch (DE)
Erfinder : Schorr, Wolfgang
Walter-Rathenausstrasse 26
D-6148 Heppenheim (DE)

## Beschreibung

In der deutschen Patentanmeldung P 28 52 764.2 (DE-OS 28 52 764) ist eine Vorrichtung nach dem Oberbegriff des Anspruches 1 beschrieben, bei der zur Ausschaltung von äußeren Störfeldern die Signale von jeweils zwei parallelen Flächen Additionsverstärkern zugeführt werden, die daraus zwei Flächensignale bilden, die, über einen Differenzverstärker verknüpft, das doppelte Nutzsignal sowie ein zu Null kompensiertes Störsignal liefern.

Es hat sich gezeigt, daß trotz dieser Maßnahmen durch Feldverzerrungen, die z. B. durch das Erdmagnetfeld selbst oder durch ferromagnetische Materialien, die bei Anwendung der Vorrichtung in den Antennenbereich eingebracht oder diesem angenähert werden, entstehen, eine unvollkommene Kompensation erreicht wird und dadurch eine Beeinträchtigung des gesamten Meßverfahrens gegeben ist. Dieser Mangel resultiert bei der bekannten Vorrichtung in erster Linie daraus, daß sich die Signalauswertung zur Eliminierung der Störsignale ausschließlich auf die Antennen bezieht, Störsignale innerhalb des Meßbereiches dagegen weitgehend unberücksichtigt bleiben.

Der in Anspruch 1 angegebenen Erfindung liegt die Aufgabe zugrunde, demgegenüber eine Verbesserung zu schaffen, insbesondere mit dem Ziel, Störfelder, die im Bereich des Meßsystems, also im Bereich des durch die Antennen begrenzten Volumens, entstehen so zu eliminieren, daß keine Beeinträchtigung des Meßverfahrens mehr gegeben ist.

Ein Ausführungsbeispiel der Erfindung wird anhand der Zeichnung näher erläutert.

Es zeigen :

Fig. 1 eine Ausführungsform der erfindungsgemäßen Vorrichtung in einer schaubildlichen Darstellung,

Fig. 2 eine perspektivische Darstellung des durch die Eckpunkte der einzelnen Aufnehmer gebildeten Quaders,

Fig. 3 bis 5 Blockschaltbilder zur Signalauswertung.

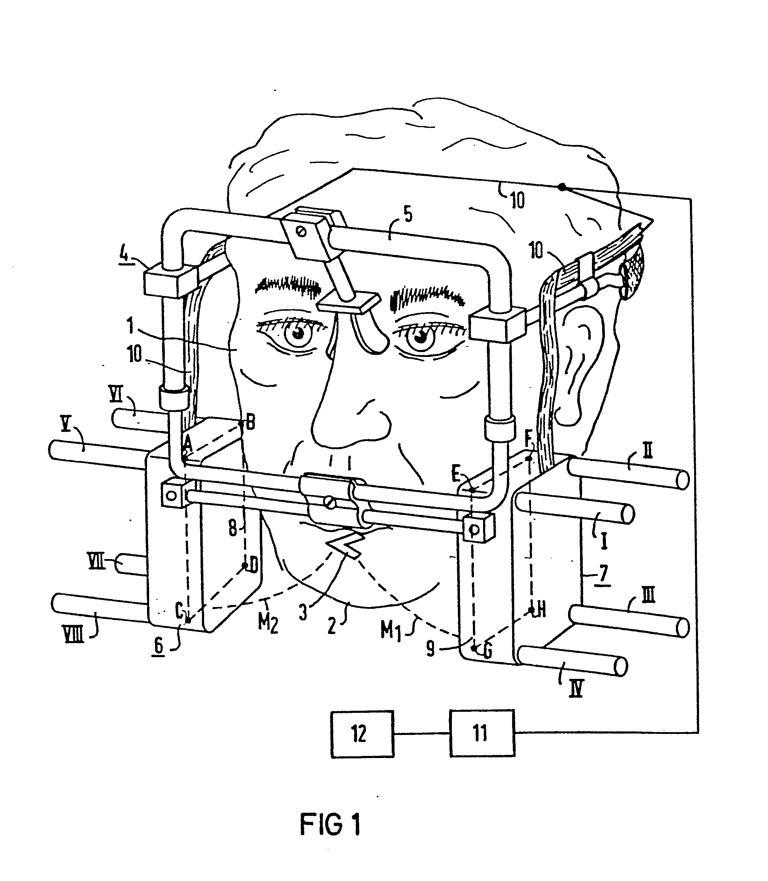

Die Fig. 1 zeigt in einer schaubildlichen Darstellung die erfindungsgemäße Vorrichtung in einer besonders vorteilhaften Anwendung, nämlich in der Zahnmedizin, zur Bestimmung des Ortes, der Lage und/oder einer Orts-bzw. Lageänderung eines Punktes des Unterkiefers eines Patienten. In der Figur ist mit 1 der Kopf eines Patienten und mit 2 dessen Unterkiefer bezeichnet. Mit 3 ist ein als Felderzeuger dienender Permanentmagnet bezeichnet, der intraoral an einer beliebigen Stelle des Unterkiefers durch geeignete Haft- oder Klebemittel (z. B. Abdruckmasse) befestigt wird. Der Magnetfelderzeuger 3 besteht aus zwei gleichdimensionierten Stabmagneten, wie sie in der deutschen Patentanmeldung P 27 15 106 näher beschrieben sind. Der Öffnungswinkel der beiden Stabmagnete beträgt etwa 90°. Die Stabmagnete sind relativ klein ; sie haben etwa eine Länge von 3 mm und einen Querschnitt von etwa 1 mm in Quadrat. Der Magnetfelderzeuger 3 erzeugt zwei in der Figur gestrichelt angedeutete, unregelmäßige, nicht rotationssymmetrische Magnetfelder $M_1$ und $M_2$.

Extraoral des Patientenmundes befindet sich eine Magnetflußaufnehmeranordnung 4, bestehend im wesentlichen aus einem am Patientenkopf 1 gehalterten Gestell 5 und einem Aufnehmersystem mit einem links und rechts vom Unterkiefer befindlichen Aufnehmerblock 6 und 7. Das Gestell 5 ist in bekannter Weise als kombiniertes Brillen- oder Kopfgestell ausgebildet und enthält mehrere, nicht näher bezeichnete Gelenke zur Anpassung an die unterschiedlichen Kopfkonstellationen eines Patienten. Die beiden Aufnehmerblöcke 6, 7 sind durch eine mit dem Gestell 5 verbundene Stange 8 starr miteinander verbunden.

Jeder der Aufnehmerblöcke 6, 7 enthält vier Magnetflußaufnehmer I bis VIII, die in einem Kunststoffgehäuse 9 gehalten sind, und zwar so, daß sie jeweils parallel zueinander liegen. Die von den Magnetflußaufnehmern I bis VIII aufgenommenen Signale werden über Leitungen 10 einer elektronischen Auswerteinrichtung 11 und von dort aus weiter einer geeigneten Indikatoreinrichtung 12 zugeführt.

Aufbau und Anordnung der Magnetflußaufnehmer I bis VIII sind in der eingangs erwähnten Patentanmeldung näher aufgezeigt. Es sei diesbezüglich erwähnt, daß jeder Magnetflußaufnehmer einen als Sensorelement dienenden plättchenförmigen Hallgenerator enthält, an dessen wirksame Fläche beidseitig verschieden lange Antennenstäbe aus Mu-Metall anliegen. Die von den Magnetflußaufnehmern I bis VIII bzw. von den Hallgeneratoren aufgenommenen Signale werden über einem im Gehäuse 9 angeordneten Vorverstärker verstärkt der Elektronikeinheit 11 zugeführt.

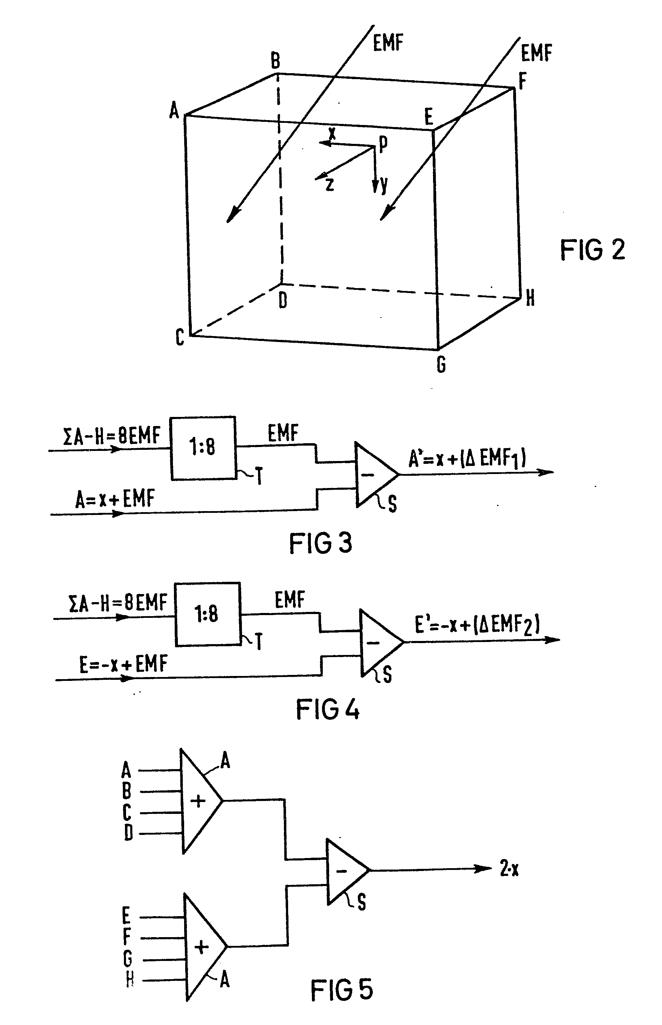

Jeder der Aufnehmer erthält eine Hülse aus nicht ferromagnetischem Material, in die eine aus zwei Teilen bestehende Antenne mit dem dazwischenliegenden Hallgenerator eingeschoben wird. Durch die spezielle Anordnung der Antennen und der symmetrischen Anordnung der Hallgeneratoren bilden diese an einer dem Patientenkopf unmittelbar benachbarten Fläche des Gehäuses 9 Fest- oder Bezugspunkte A bis H, deren Verbindungslinien einen in Fig. 2 dargestellten Quader begrenzen. Der Magnetfelderzeuger 3 befindet sich (siehe Fig. 1) innerhalb des durch den Quader gebildeten Raumes. Ausgehend von einem in diesem Raum angenommenen Punkt P, in dem sich der Magnetfelderzeuger 3 befindet, werden durch die symmetrische Anordnung der Magnetfeldaufnehmer an den dür die Antennenwirkung repräsentiven Eckpunkten A bis H bezüglich einer Bewegung des Unterkiefers bzw. des Felderzeugers in den drei Ebenen X, Y und Z die Signale x, y und z und bei Bewegung in die Gegenrichtung die Signale — x, — y und — z gewonnen.

Die Erfindung geht nun von der Erkenntnis, aus, daß zwischen korrespondierenden Antennenpaaren das Summensignal beider Antennen unabhängig ist von der Bewegung des Magneten in Richtung der Verbindungslinie beider korrespondierender Antennen, andererseits aber dieses Summensignal ein Maß für die Größe des Störfeldes darstellt, welches im folgenden mit EMF abgekürzt ist.

So gilt beispielsweise für die Bewegung in X-Richtung

die Beziehung für den Punkt A : A = x + EMF

für den Punkt E : E = — x + EMF

für A + B : A + B = 2 · EMF.

Analoges gilt für die Y- und Z-Richtung.

Gemäß der Erfindung werden nun die elektrischen Signale aller acht Antennen addiert (ε A bis H = 8 EMF). Dieses Summensignal ist, wie vorstehend aufgezeigt, unabhängig von der Bewegung des Magneten 3. Nachdem man die Summe aller acht Antennensignale in die Auswertung einbezieht, erhält man für die Störgröße ein repräsentatives Signal, bezogen auf das vom Antennensystem A bis H begrenzte Volumen. Dieses Störfeld-Summensignal, welches unabhängig von irgendwelchen Änderungen des Nutzsignals (Änderung des Magneten im Raum) ist, stellt im Vergleich zu dem früheren Vorschlag, bei dem die Störfeldsignale nur repräsentativ für die Feldstärke am jeweiligen Ort der Antenne waren, nunmehr ein über ein erheblich größeres Volumen gemitteltes Maß für die Stärke des Störfeldes dar.

Die Kompensation erfolgt in einer Kompensationsschaltung gemäß Fig. 2 und 4, indem für jeden Bezugspunkt A bis H (in Fig. 3 für den Punkt A und in Fig. 4 für den Punkt E aufgezeigt) die Summe der Störsignale ( ‖ A bis H = 8 EMF) in einem Teiler (T) entsprechend der Anzahl der vorhandenen Antennen, im vorliegenden Fall also durch 8, geteilt wird und dieses so gewonnene Störsignal jeweils von dem an der Antenne erfaßten Einzelsignal (x + EMF, y + EMF, z + EMF...) subtrahiert wird. Am Ausgang des Subtrahierers erhält man dann das von Störfeldern kompensierte Nutzsignal x, y und z.

Eventuell verbleibende Reststörfelder (in den Fig. 3) und 4 mit △ EMF bezeichnet, können dadurch eliminiert werden, daß anschließend in bekannter Weise die Signale jeweils zweier Bezugspunkte voneinander subtrahiert werden. Für die Punkte A und E ergibt sich in X-Richtung

$$A = x + \Delta EMF$$
$$\underline{E = - x + \Delta EMF}$$
$$A - E = 2 \cdot x + \Delta EMF - \Delta EMF$$
$$= 2x$$

Analoges gilt für die anderen Bezugspunkte B bis H.

Aus dem Vorstehenden ergibt sich, daß mit den vorgeschlagenen Maßnahmen eine doppelte Kompensation erzielt wird, und zwar einerseits vor der Signalverarbeitung durch Subtraktion der aus den Summensignalen der Störfelder gewonnenen Störsignale von den Einzelsignalen und andererseits durch die bisher schon bekannte Kompensation durch Subtraktion der Einzelsignale, wobei letzteres dadurch erfolgen kann, daß man, wie in Fig. 5 aufgezeigt und eingangs erläutert, die Signale von jeweils zwei parallelen Flächen zunächst Additionsverstärkern (A) zuführt, die daraus zwei Flächensignale bilden, die dann über einen Differenzverstärker (S) verknüpft das doppelte Nutzsignal und ein zu Null kompensiertes Störsignal liefern.

## Patentansprüche

1. Vorrichtung zur Messung und Registrierung des Ortes, der Lage und/oder der Orts- bzw. Lageänderung eines starren Körpers im Raum, unter Verwendung eines am Körper direkt oder im Abstand davon angeordneten Magnetfelderzeugers (3), der ein definiertes unregelmäßiges Feld erzeugt, mit im Abstand vom Magnetfelderzeuger (3) angeordneten, vom Körper unabhängigen Magnetflußaufnehmern (I bis VIII) zur Erfassung des Feldflusses bzw. einer Feldflußänderung während einer Messung, denen die Feldlinien konzentrierende Antennen zugeordnet sind, deren dem Felderzeuger (3) zugewandte Enden die Eckpunkte (A bis H) eines Quaders (Fig. 2) bilden, innerhalb dessen durch die Eckpunkte bestimmten Raumes der Magnetfelderzeuger (3) angeordnet ist, sowie mit einer elektronischen Einrichtung (11) zur Gewinnung und Auswertung von bei einem Feldfluß bzw. einer Feldflußänderung entstehenden elektrischen Signalen, dadurch gekennzeichnet, daß die elektronische Einrichtung (11) derart ausgestaltet ist, daß zur Ausschaltung von äußeren Störfeldern (EMF) die elektrischen Signale (x + EMF, y + EMF, z + EMF) sämtlicher Aufnehmer (I bis VIII) zunächst addiert, die daraus gebildeten Summenstörsignale (8 EMF) im Verhältnis der Zahl der vorhandenen Aufnehmer (I bis VIII) geteilt und diese durch Teilung gewonnenen Störsignale (EMF) jeweils von den Einzelsignalen (x + EMF, y + EMF, z + EMF) der Aufnehmer (I bis VIII) in einem Subtrahierglied (S) subtrahiert werden.

2. Vorrichtung nach Anspruch 1, dadurch gekennzeichnet, daß eventuell vorhandene Reststörfeldsignale (EMF) durch weiteres Subtrahieren der nach Subtraktion erhaltenen Signale mit Signalen korrespondierender Bezugspunkte (AE, BF, DH, CG) eliminiert werden.

**0 142 609**

**Claims**

1. A device for measuring and recording the location, the attitude, and/or the change in location or attitude (as the case may be) of a rigid body in space, using a magnetic field generator (3) arranged directly on the body or at an interval therefrom, which generates a determinate, irregular field, magnetic flux receivers (I to VIII) arranged at an interval from the magnetic flux generator (3) and independent of the body which detect the field flux or a change in the field flux during a measurement and are assigned antennae which concentrate the field lines and whose ends which face towards the field generator (3) form the corner points (A to H) of a parallelepiped (Fig. 2) within the area of which — as defined by the corner points — the magnetic field generator (3) is arranged, and with an electronic device (11) which acquires and analyses electrical signals which occur with a field flux or a change in field flux, characterised in that the electronic device (11) is designed such that, for the decoupling of external interference fields (EMF), the electrical signals (x + EMF, y + EMF, z + EMF) of all the receivers (I to VIII) are firstly added, the sum intererence signals (8 EMF) formed therefrom are divided in the ratio of the number of existing receivers (I to VIII) and these interference signals (EMF), obtained by division, are in each case subtracted from the individual signals (x + EMF, y + EMF, z + EMF) of the receivers (I to VIII) in a subtractor (S).

2. A device as claimed in Claim 1, characterised in that any residual interference field signals (EMF) which may remain are eliminated by further subtraction of the signals obtained following the subtraction process with signals of corresponding reference points (AE, BF, DH, DG).

**Revendications**

1. Dispositif pour mesurer et enregistrer l'emplacement, la position et/ou la modification de l'emplacement ou de la position d'un corps rigide dans l'espace, moyennant l'utilisation d'un générateur de champ magnétique (3) installé directement sur le corps ou à distance de ce dernier et qui produit un champ irrégulier défini, et comportant des détecteurs de flux magnétique (I à VIII), qui sont disposés à distance du générateur de champ magnétique (3), sont indépendants du corps et servent à détecter le flux du champ ou une variation du flux du champ pendant une mesure et auxquels sont associés des antennes concentrant les lignes de champ et dont les extrémités, tournées vers le générateur de champ (3) forment les sommets (A à H) d'un parallélépipède (figure 2), dans l'espace intérieur, déterminé par les sommets, duquel se trouve disposé le générateur de champ magnétique (3), ainsi qu'un dispositif électronique (11) servant à recueillir et évaluer des signaux électriques apparaissant dans le cas d'un flux du champ ou d'une variation du flux du champ, caractérisé par le fait que le dispositif électronique (11) est agencé de telle sorte que, pour obtenir la suppression de champs parasites extérieurs (EMF), les signaux électriques (x + EMF, y + EMF, z + EMF) de tous les détecteurs (I à VIII) sont tout d'abord additionnés, que les signaux parasites sommes (8 EMF), ainsi formés, sont divisés par le nombre des détecteurs présents (I à VIII), et que ces signaux parasites (EMF) obtenus par division sont soustraits respectivement des signaux individuels (x + EMF, y + EMF, z + EMF) des détecteurs (I à VIII), dans un circuit soustracteur (S).

2. Dispositif suivant la revendication 1 caractérisé par le fait que l'on élimine des signaux de champs parasites (EMF) éventuellement présents en soustrayant simplement, des signaux obtenus par soustraction, des signaux de points de référence correspondants (AE, BF, DH, CG).

**FIG 1**

FIG 2

FIG 3

FIG 4

FIG 5

2